# EUROPEAN PATENT APPLICATION

(11) **EP 3 322 003 A1**
(43) Date of publication of application: **16.05.2018**
(21) Application number: 16821137.3
(22) Date of filing: 02.06.2016
(51) Int. Cl.: H01M 4/02, H01M 4/04, H01M 4/38, H01M 12/08

(54) **NEGATIVE ELECTRODE FOR IRON-AIR SECONDARY CELL, IRON-AIR SECONDARY CELL, AND METHOD FOR MANUFACTURING NEGATIVE ELECTRODE FOR IRON-AIR SECONDARY CELL**

(30) Priority: 06.07.2015 JP 2015135656; 06.11.2015 JP 2015218506; 17.03.2016 JP 2016053895
(71) Applicant: Kabushiki Kaisha Kobe Seiko Sho (Kobe Steel, Ltd.), Kobe-shi, Hyogo 651-8585 (JP); National University Corporation Toyohashi University of Technology, Toyohashi-shi, Aichi-ken 441-8580 (JP)
(72) Inventor: HAYASHI, Kazushi, Hyogo 651-2271 (JP); SAKAMOTO, Hisatoshi, Hyogo 651-2271 (JP); MATSUDA, Atsunori, Toyohashi-shi Aichi 441-8580 (JP); MAEDA, Yasutaka, Toyohashi-shi Aichi 441-8580 (JP); SUZUKI, Tsubasa, Toyohashi-shi Aichi 441-8580 (JP)
(74) Representative: Müller-Boré & Partner Patentanwälte PartG mbB
(86) International application number: PCT/JP2016/066488
(87) International publication number: WO 2017/006666

(57) **Abstract**

A negative electrode for use in an iron-air secondary battery of the present invention comprises a three-dimensionally formed structure in which particles of metal powder comprising iron or an iron alloy as a principal component are coupled to each other through metallic bonding, wherein the negative electrode has a porosity of greater than or equal to 30% and less than or equal to 70%. A production method of a negative electrode for an iron-air secondary battery of the present invention comprises: mixing with a resin, metal powder comprising iron or an iron alloy as a principle component; molding a mixture obtained after the mixing; and sintering a molded body obtained after the molding.

## Description

### TECHNICAL FIELD

The present invention relates to a negative electrode for an iron-air secondary battery, an iron-air secondary battery, and a production method of a negative electrode for an iron-air secondary battery.

### BACKGROUND ART

As of now, among secondary batteries in practical use, a lithium-ion battery has the highest energy density (the greatest amount of dischargeable electricity with respect to the battery mass). Meanwhile, a metal-air secondary battery attracts attention as a secondary battery having a higher energy density than that of the lithium ion battery. In a metal-air secondary battery, oxygen in the air serves as a positive electrode active material and a metal serves as a negative electrode active material. The metal-air secondary battery has an advantage that the mass of the positive electrode active material is theoretically zero, since oxygen in the air acts as the positive electrode. The most part of the battery mass is composed of the mass of the positive electrode active material and the negative electrode active material, and the mass of an electrolyte that mediates the reaction. Accordingly, the metal-air secondary battery in which the mass of the positive electrode active material is zero achieves a dramatic increase in energy density.

The metal-air secondary battery commonly includes a positive electrode (air electrode) obtained by combining a conductive material such as carbon powder with an oxygen reduction catalyst, and a negative electrode (metal electrode) being zinc, aluminum, iron, lithium or the like. Of the materials for the negative electrode, iron is superior in terms of cost, etc. For example, a metal-air all-solid-state secondary battery (iron-air secondary battery) has been proposed including a negative electrode in which iron oxide nanoparticles as a negative electrode active material are retained on the surface of a KOH-ZrO₂-based solid electrolyte (see Japanese Unexamined Patent Application, Publication No. 2012-74371). The characteristics of the iron-air secondary battery including such a negative electrode are reportedly superior to those of a battery including a negative electrode composed of iron powder alone. However, the energy density and the maximum discharge capacity of the iron-air secondary battery including the aforementioned negative electrode are still insufficient for practical applications, and therefore, development of superior electrodes for iron-air secondary batteries is demanded.

### PRIOR ART DOCUMENTS

### PATENT DOCUMENTS

Patent Document 1: Japanese Unexamined Patent Application, Publication No. 2012-74371

### SUMMARY OF THE INVENTION

### PROBLEMS TO BE SOLVED BY THE INVENTION

The present invention was made in view of such a circumstance, and the object of the present invention is to provide: a negative electrode for an iron-air secondary battery that enables a high energy density iron-air secondary battery to be provided; a high energy density iron-air secondary battery; and a production method of a negative electrode for an iron-air secondary battery, which enables a high energy density iron-air secondary battery to be provided.

### MEANS FOR SOLVING THE PROBLEMS

According to an aspect of the invention made for solving the aforementioned problems, a negative electrode for use in an iron-air secondary battery comprises a three-dimensionally formed structure in which particles of metal powder comprising iron or an iron alloy as a principal component are coupled to each other through metallic bonding, wherein the negative electrode has a porosity of greater than or equal to 30% and less than or equal to 70%.

The negative electrode for an iron-air secondary battery includes the three-dimensionally formed structure composed of the metal powder containing iron or an iron alloy as a principal component. Since the particle size of the metal powder is small, when ions that serve as electron carriers (carrier ions) are supplied to the surface of particles of the metal powder, the majority of iron contained in the particles is enabled to react with the carrier ions. When the negative electrode for an iron-air secondary battery has a porosity of greater than or equal to 30% and less than or equal to 70%, the carrier ions are allowed to reach deep into the inner part of the three-dimensionally formed structure, and therefore the iron in the metal powder contained in the inner part is enabled to be utilized for battery reaction. Thus, the use of the negative electrode for an iron-air secondary battery increases the energy density of the iron-air secondary battery.

It is to be noted that the term "porosity" as referred to means a value measured pursuant to JIS-Z2501 (2000).

The three-dimensionally formed structure may be a sintered body of the metal powder. By virtue of the three-dimensionally formed structure thus being a sintered body of the metal powder, easy and inexpensive formation of the three-dimensionally formed structure is enabled.

The three-dimensionally formed structure may have continuous air holes. By virtue of the continuous air holes provided in the three-dimensionally formed structure, the carrier ions are enabled to reach deep into the inner part of the three-dimensionally formed structure more reliably, leading to an increase in the energy density of the iron-air secondary battery.

Carbon may be attached to a surface of the three-dimensionally formed structure. By virtue of carbon attached to the surface of the three-dimensionally formed structure, an improvement of the electric conductivity of the negative electrode for an iron-air secondary battery and a reduction of the internal resistance of the iron-air secondary battery are enabled. Similarly, sulfur may be attached to a surface of the three-dimensionally formed structure. By virtue of sulfur attached to the surface of the three-dimensionally formed structure, inhibition of formation of an iron oxide film on the surface of the negative electrode for the iron-air secondary battery upon reduction of iron, and in turn sufficient reduction to zero-valent iron, are enabled upon charge of the battery. The term "surface of the three-dimensionally formed structure" as referred to encompasses the inner walls of air holes of the three-dimensionally formed structure.

The mean particle diameter of the metal powder is preferably greater than or equal to 10 µm and less than or equal to 100 µm. When the mean particle diameter of the metal powder falls within the above range, an increase in the energy density of the iron-air secondary battery is enabled. It is to be noted that the term "mean particle diameter" as referred to means an average value of the equivalent circle diameter of particles measured by microscopic inspection of the surface of the three-dimensionally formed structure.

The metal powder may be water atomized powder. By virtue of the metal powder being water atomized powder, the surface area of the metal powder, and in turn the surface area of the negative electrode for the iron-air secondary battery, are increased, leading to a further improvement of energy density through enhanced reactivity. Furthermore, since the water atomized powder is suited for mass production, inexpensive production of the negative electrode for the iron-air secondary is enabled.

The iron-air secondary battery may comprise a solid electrolyte. By virtue of including a solid electrolyte, the structure of the iron-air secondary battery is simplified and handling of the iron-air secondary battery is facilitated, leading to increased design freedom of the iron-air secondary battery and, in turn, that of the negative electrode for the iron-air secondary battery.

According to another aspect of the invention made for solving the aforementioned problems, an iron-air secondary battery comprises the negative electrode for an iron-air secondary battery according to the aforementioned aspect of the present invention.

By virtue of including the negative electrode for an iron-air secondary battery, the iron-air secondary battery is enabled to have a higher energy density.

According to still another aspect of the present invention made for solving the aforementioned problems, a production method of a negative electrode for an iron-air secondary battery includes: mixing with a resin, metal powder containing iron or an iron alloy as a principle component; molding a mixture obtained after the mixing; and sintering a molded body obtained after the molding.

Due to involving the sintering of the mixture of the metal powder and the resin, the production method of a negative electrode for an iron-air secondary battery enables formation of the air holes (opening area) through thermolysis of the resin, whereby a negative electrode for an iron-air secondary battery including a three-dimensionally formed structure having a high porosity is provided. Thus, in the negative electrode for an iron-air secondary battery obtained by the production method of a negative electrode for an iron-air secondary battery, iron in the inner part of the three-dimensionally formed structure is enabled to be utilized for battery reaction. Accordingly, the production method of a negative electrode for an iron-air secondary battery enables production of a negative electrode for an iron-air secondary capable of increasing the energy density of the iron-air secondary battery.

### EFFECTS OF THE INVENTION

The negative electrode for an iron-air secondary battery and the production method of a negative electrode for an iron-air secondary battery according to the aspects of the present invention enable an iron-air secondary battery having a high energy density to be provided. Furthermore, the iron-air secondary battery according to the another aspect of the present invention has a high energy density.

### BRIEF DESCRIPTION OF THE DRAWINGS

Fig. 1 is a schematic view illustrating the constitution of an iron-air secondary battery according to an embodiment of the present invention;
Fig. 2 is a micrograph of the surface of a negative electrode for an iron-air secondary battery of Example 1 of the present invention;
Fig. 3 is a graph showing discharge characteristics of an iron-air secondary batteries including the negative electrode for an iron-air secondary battery of Example 1 and a negative electrode for an iron-air secondary battery of Comparative Example, respectively;
Fig. 4 is a micrograph of a cross section of the negative electrode for an iron-air secondary battery of Example 1 of the present invention after discharge of a battery;
Fig. 5 is a micrograph of a cross section of the negative electrode for an iron-air secondary battery of Comparative Example of the present invention after discharge of a battery;
Fig. 6 is a scanning electron micrograph of a negative electrode for an iron-air secondary battery of Example 2 of the present invention;
Fig. 7 is a graph showing a relationship between a discharge capacity and the number of charge cycles of an iron-air secondary battery including the negative electrode for an iron-air secondary battery of Example 2;
Fig. 8 is a graph showing a charge-discharge curve of an iron-air secondary battery including a negative electrode for an iron-air secondary battery of Example 3;
Fig. 9 is a scanning electron micrograph of a negative electrode for an iron-air secondary battery of Example 4 of the present invention;
Fig. 10 is a graph showing charge-discharge characteristics of an iron-air secondary battery including a negative electrode for an iron-air secondary battery of Example 4;
Fig. 11 is an enlarged graph showing a part of the graph of Fig. 10 immediately after the start of discharge;
Fig. 12 is a schematic exploded view illustrating the constitution of an iron-air secondary battery of Example 5 of the present invention; and
Fig. 13 is a graph showing charge-discharge characteristics of an iron-air secondary battery including the negative electrode for an iron-air secondary battery of Example 5.

### DESCRIPTION OF EMBODIMENTS

Embodiments of the present invention will be described in detail with appropriate reference to the drawings.

### Iron-Air Secondary Battery

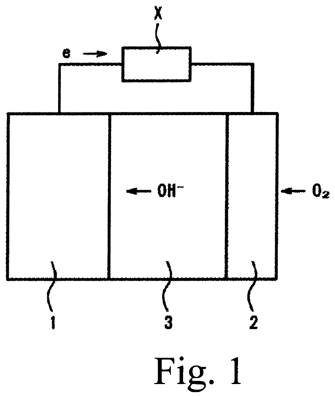

The iron-air secondary battery according to an embodiment of the present invention illustrated in Fig. 1 includes: an iron negative electrode 1 (negative electrode for an iron-air secondary battery) according to another embodiment of the present invention; an air electrode 2 (positive electrode for an iron-air secondary battery) opposed to the iron negative electrode 1; and an electrolyte 3 with which a gap between the iron negative electrode 1 and the air electrode 2 is filled. In the iron-air secondary battery illustrated in Fig .1, the iron negative electrode 1 and the air electrode 2 are each connected with a conducting wire, through which the iron-air secondary battery is electrically connected to a load X.

The iron-air secondary battery is a rechargeable battery in which iron contained in the iron negative electrode 1 serves as a negative electrode active material and oxygen in the air serves as a positive electrode active material.

### < Iron Negative Electrode >

The iron negative electrode 1 is an anode in which iron serves as an active material. The iron negative electrode 1 includes a three-dimensionally formed structure composed of metal powder containing iron or an iron alloy as a principle component. In the three-dimensionally formed structure, particles of the metal powder are coupled to each other through metallic bonding. The metal powder constituting the three-dimensionally formed structure may contain an additive element. The three-dimensionally formed structure may further contain a material other than the metal powder. As the three-dimensionally formed structure, a sintered body of the metal powder, which is readily formed, is suited. The iron negative electrode 1 may comprise the three-dimensionally formed structure of the metal powder alone, or may further include, for example, a current collecting conductor, a reinforcing structure, or the like. The shape and the dimensions of the iron negative electrode may be selected in accordance with an energy density per weight of iron, such that a discharge capacity required for the iron-air secondary battery is provided.

In the iron negative electrode 1, due to a contact area between the negative electrode active material (iron) and the electrolyte 3 being increased by penetration of the electrolyte 3 into air holes in the three-dimensionally formed structure of the metal powder, a reaction of the negative electrode active material is accelerated. Accordingly, the three-dimensionally formed structure of the iron negative electrode 1 preferably includes the continuous air holes in such manner that the three-dimensionally formed structure, even a central portion thereof, is entirely impregnated with the electrolyte 3.

The lower limit of the porosity of the iron negative electrode 1 is 30%, preferably 35%, and more preferably 40%. Meanwhile, the upper limit of the porosity of the iron negative electrode 1 is 70%, preferably 65%, and more preferably 60%. When the porosity of the iron negative electrode 1 is less than the lower limit, the energy density of the iron-air secondary battery may be insufficient due to a reduced surface area of the iron negative electrode 1. To the contrary, when the porosity of the iron negative electrode 1 is greater than the upper limit, strength of the iron negative electrode 1 may be insufficient and formation of the iron negative electrode 1 may be difficult.

In the iron negative electrode 1, the three-dimensionally formed structure preferably has carbon attached to the surface thereof (including the inner walls of the air holes). Carbon assists electric conduction of the three-dimensionally formed structure and reduces internal resistance of the iron-air secondary battery. As described later, carbon may be generated by carbonizing a resin used for formation of the air holes in the three-dimensionally formed structure.

In the iron negative electrode 1, the three-dimensionally formed structure preferably has at least one of chlorine and sulfur attached to the surface thereof. Chlorine and/or sulfur decompose through a chemical reaction a hydroxide formed on the surface of the three-dimensionally formed structure, other than iron which is the active material, to consequently suppress inhibition of the reaction of iron in the iron negative electrode 1. In particular, when sulfur is attached to the surface of the three-dimensionally formed structure, inhibition of formation of an iron oxide film on the surface of the iron negative electrode 1 upon reduction of iron, and in turn sufficient reduction to zero-valent iron, are enabled upon charge of the battery. It is to be noted that the attachment of sulfur may be achieved by, for example, encapsulating iron particles in a vacuum tube and then vaporizing sulfur by heat, to form iron sulfide on the surface of the iron particles.

The lower limit of the mean particle diameter of the metal powder is preferably 10 µm, more preferably 20 µm, and still more preferably 30 µm. Meanwhile, the upper limit of the mean particle diameter of the metal powder is preferably 100 µm, more preferably 90 µm, and still more preferably 80 µm. When the mean particle diameter of the metal powder is less than the lower limit, handling of the metal powder may be difficult during formation of the negative electrode. Furthermore, air holes formed in the negative electrode may not be sufficiently large, and consequently the inner part of the three-dimensionally formed structure is less likely to be impregnated with the electrolyte 3, leading to an insufficient energy density of the iron-air secondary battery. To the contrary, when the mean particle diameter of the metal powder is greater than the upper limit, a central part of the particle of the metal powder may not react, leading to an insufficient energy density of the iron-air secondary battery.

The lower limit of an average equivalent circle diameter of a coupled (fused) portion between the particles of the metal powder is preferably 3 µm and more preferably 5 µm. Meanwhile, the upper limit of the average equivalent circle diameter of the coupled portion between the particles of the metal powder is preferably 50 µm and more preferably 30 µm. When the average equivalent circle diameter of the coupled portion between the particles of the metal powder is less than the lower limit, electrical conduction between the particles of the metal powder may be insufficient, leading to limited charge/discharge performance of the iron-air secondary battery. To the contrary, when the average equivalent circle diameter of the coupled portion between the particles of the metal powder is greater than the upper limit, the energy density of the iron-air secondary battery may be insufficient due to a reduced surface area of the three-dimensionally formed structure, or it may be difficult to ensure the sufficient porosity.

The metal powder is not particularly limited, but is preferably water atomized powder. The water atomized powder is obtained by atomizing and coagulating molten metal by spraying water at high pressure thereonto. Since the water atomized powder has irregularities on the surface thereof and in turn a great specific surface area, an increased contact area between the three-dimensionally formed structure of the iron negative electrode 1 and the electrolyte 3 enables an increase in the energy density of the iron-air secondary battery. The water atomized powder may be produced or purchased inexpensively.

The contact area between the three-dimensionally formed structure in the negative electrode 1 and the electrolyte 3 may also be increased by etching. As the etching for this purpose, formation of micro facet pits of several microns on the surface by etch pit corrosion is suited. In the etching, two different types of etchants (solution A: a mixture solution containing HCL, H₂O₂ and H₂O, solution B: a mixture solution containing a saturated aqueous solution of FeCl₃·6H₂O, as well as H₂O and HNO₃) are used. First, substantially uniformly distributed pits are formed with the solution A, where the pit size can be regulated by adjusting a proportion of hydrogen peroxide, and then low index facets of {100}, {110} or the like are grown on the inner face of each pit through anisotropic etching with the solution B. A greater proportion of hydrogen peroxide in the solution A generates a greater number of smaller pits of 1 to 2 µm, and to the contrary, a smaller proportion generates a smaller number of larger pits. In addition, the facet pits can be enlarged by further using formic acid.

Furthermore, particles having a smaller particle size may be compounded with the metal powder. Examples of the particles include sponge iron, carbonyl iron particles, iron oxide particles, and the like having a mean particle diameter of less than or equal to 5 µm and more preferably less than or equal to 3 µm. As the compounding procedure, a procedure taking advantage of a difference in surface potential such as electrostatic adsorption, a mechanical compounding procedure such as a mechanochemical process or a mechanofusion process, or the like may be employed.

### < Air Electrode >

The air electrode 2 is composed of a conductive material in order to supply electrons serving to a reaction of oxygen in the air, which is the positive electrode active material. In addition, the air electrode 2 preferably carries an oxygen reduction catalyst that accelerates a decomposition reaction of hydrogen peroxide in the positive electrode (described later). Furthermore, it is preferred that the air electrode 2 is capable of generating oxygen and is durable.

As the conductive material, carbon is suitably used. For example, a green compact of carbon powder, carbon paper or the like may be used. The oxygen reduction catalyst is exemplified by platinum, manganese dioxide, various types of perovskite-type oxides, and the like.

As the air electrode 2, a sheet-like air electrode is preferably used. The lower limit of an average thickness of the air electrode 2 is preferably 0.05 mm and more preferably 0.1 mm. Meanwhile, the upper limit of the average thickness of the air electrode is preferably 0.3 mm and more preferably 0.2 mm. When the average thickness of the air electrode 2 is greater than or equal to the lower limit, a sufficient reaction and the like are enabled. When the air electrode is too thick, efficient formation of a three-phase interface of the electrolyte, the catalyst, and the air tends to be difficult.

### < Electrolyte >

As the electrolyte 3, an electrolyte that provides a hydroxide ion (OH⁻) serving as a carrier of charge between the iron negative electrode 1 and the air electrode 2, and that is typically used for metal-air secondary batteries may be used. The electrolyte 3 may be either a liquid electrolyte or a solid electrolyte. In addition, multiple types of electrolytes may be used, and a plurality of electrolytes in a multilayer structure may be used. For example, an enclosed space defined by a frame-like member interposed between the iron negative electrode 1 and the air electrode 2 may be filled with the electrolyte 3. It is to be noted that the electrolyte 3 is preferably a solid electrolyte such that a member for enclosing the space to be filled with the electrolyte 3 is not necessary.

The liquid electrolyte is exemplified by a solution electrolyte in which a salt is dissolved or an ionic liquid. The solution electrolyte as the liquid electrolyte is exemplified by alkaline aqueous solutions such as an aqueous solution of potassium hydroxide and an aqueous solution of sodium hydroxide, and the like. In addition, the electrolyte may contain additives such as potassium sulfide (K₂S).

In the case in which the solid electrolyte is used as the electrolyte, the iron-air secondary battery is typically configured to include a laminate structure in which a thin-film like solid electrolyte is interposed between the plate-like iron negative electrode 1 and the plate-like air electrode 2. Due to using such a thin-film like solid electrolyte, a further increase in the energy density of the iron-air secondary battery is enabled.

The term "solid electrolyte" as referred to means an electrolyte that is not fluid. The solid electrolyte is exemplified by an electrolyte constituted from a polymer such as a polyethylene oxide polymer, an electrolyte constituted from an inorganic substance such as Li₂S-SiS₂, a gel electrolyte in which a salt of a basic hydroxide etc. is retained by gel, and the like. Examples of the salt in the gel solid electrolyte include basic hydroxides such as potassium hydroxide and sodium hydroxide, and the like. Examples of the gel include a zirconia gel and the like. A binder such as polyvinylidene fluoride (PVdF) may be blended into the solid electrolyte.

In the case in which the solid electrolyte has the layered structure, an average film thickness is preferably greater than or equal to 0.1 mm, in light of developing a function of conducting hydroxide ions and preventing a short-circuit. Meanwhile, the average film thickness is, for example, preferably less than or equal to 0.3 mm, since an effective resistance (internal resistance of the battery) becomes high when the solid electrolyte is too thick.

### < Charge/Discharge of Iron-Air Secondary Battery >

Principles of charge and discharge of the iron-air secondary battery will be described below.

Upon discharge of the iron-air secondary battery, iron in the three-dimensionally formed structure of the iron negative electrode 1 reacts with the hydroxide ions in the electrolyte 3 to become iron hydroxide and generate electrons, as represented by the following reaction formula (1):

Fe + 2OH⁻ → Fe(OH)₂ + 2e⁻ ... (1)

Subsequently, iron hydroxide generated in the above reaction formula (1) further reacts with the hydroxide ions in the electrolyte 3 to generate iron tetraoxide and water, and in turn electrons, as represented by the following reaction formula (2):

3 Fe(OH)₂ + 2OH⁻ → Fe₃O₄ + 4H₂O + 2e⁻ ... (2)

Therefore, the above formulae (1) and (2) for the reactions in the iron negative electrode 1 may be represented collectively by the following reaction formula (3):

3Fe + 8OH⁻ → Fe₃O₄ + 4H₂O + 8e⁻ ... (3)

Upon charge of the iron-air secondary battery, a reaction reverse to the reaction represented by the above reaction formula (3), i.e., the reaction formulae (1) and (2), occurs in the iron negative electrode 1. In other words, when electrons are supplied to iron tetraoxide or iron hydroxide in the three-dimensionally formed structure of the iron negative electrode 1, iron tetraoxide or iron hydroxide is decomposed to iron and hydroxide ions.

The reaction in the iron negative electrode 1 is a solid phase reaction that does not involve elution of iron ions to the electrolyte 3 and precipitation of iron from the electrolyte 3. Therefore, a dendrite associated with elution and precipitation of metal is not formed, and consequently the shape of the iron negative electrode 1 does not change. As a result, the energy density of the iron-air secondary battery is less likely to decrease even after repeated charge and discharge.

In addition, since the reaction in the iron negative electrode 1 is a solid phase reaction, only the iron being present within a depth of several µm from the material surface is able to react with the hydroxide ions supplied by the electrolyte 3 to become iron hydroxide, and in turn iron tetraoxide, as represented by the reaction formulae (1) and (2). However, by virtue of the iron negative electrode 1 of the iron-air secondary battery including the three-dimensionally formed structure impregnated with the electrolyte 3 as described above, most of iron in the three-dimensionally formed structure is present in the vicinity of the material surface (including the inner walls of the air holes) to be in contact with the electrolyte 3 and serves for the aforementioned reaction. Therefore, the iron-air secondary battery of the present embodiment has a high energy density. In addition, due to the particles being coupled to each other through metallic bonding, a flow of current is not affected even when iron hydroxide or iron tetraoxide is formed on the material surface.

On the other hand, in the air electrode 2 upon discharge of the iron-air secondary battery, a hydrogen peroxide ion and a hydroxide ion are generated, from oxygen in the air, water in the electrolyte 3, and electrons supplied from the iron negative electrode 1 via a circuit including the load X, as represented by the following reaction formula (4):

O₂ + H₂O + 2e⁻ → O₂H⁻ + OH⁻ ... (4)

The hydrogen peroxide ion generated in the reaction represented by the reaction formula (4) is decomposed by the oxygen reduction catalyst through a catalytic reaction, and consequently a hydroxide ion and oxygen are generated as represented by the following reaction formula (5):

O₂H → OH⁻ + 1/2O₂ ... (5)

Therefore, the above formulae (4) and (5) for the reactions in the air electrode 2 may be represented collectively by the following reaction formula (6):

1/2O₂ + H₂O + 2e⁻ → 2OH⁻ ... (6)

Upon charge of the iron-air secondary battery, a reaction reverse to the reaction represented by the above reaction formula (6), i.e., the reaction formulae (4) and (5), occurs in the air electrode 2.

### < Production Method of Iron Negative Electrode >

A production method of the iron negative electrode 1 for the iron-air secondary battery will be described below.

The iron negative electrode 1 may be produced by a method comprising: mixing with a resin, metal powder containing iron or an iron alloy as a principle component (mixing step); molding a mixture obtained after the mixing step (molding step); and sintering a molded body obtained after the molding step (sintering step).

### (Mixing Step)

In the mixing step, the metal powder for forming the three-dimensionally formed structure of the iron negative electrode 1 is mixed with the resin. When fluidity of the resin is insufficient, a solution obtained by dissolving the resin in a solvent may be used. Alternatively, by using the resin in the form of powder, the metal powder and the resin powder may be dispersed in a dispersion medium to form a paste-like mixture. It is to be noted that, in addition to the metal powder and the resin, an additive may also be blended into the mixture.

The metal powder has been explained in the description in regard to the iron negative electrode 1.

The resin to be mixed with the metal powder is decomposed by heat in the sintering step, resulting in formation of the air holes in the three-dimensionally formed structure to be obtained. In some cases, the resin may serve as a binder for binding the metal powder together in the molding step.

Any resin may be mixed with the metal powder as long as the moldability of the mixture of the resin and the metal powder is not impaired and the resin is decomposed by heat in the sintering step. For example, water soluble polyvinyl alcohol and the like, may be used.

The volume ratio between the metal powder and the resin is determined according to the target porosity. Upon determining the volume ratio between the metal powder and the resin, a volume of the solvent or the dispersion medium contained in the mixture, or a volume of the air holes formed in the molded body which may vary depending on the constitution of the mixture and a molding procedure in the molding step, is also taken into consideration.

### (Molding Step)

In the molding step, the mixture of the metal powder and the resin is shaped into a desired form of the iron negative electrode 1. The shaping may be carried out with the current collecting conductor or the reinforcing structure being inserted into the mixture.

As the procedure for shaping the mixture, molding may be employed, for example, in the case in which the mixture is fluid, and compression forming may be employed, for example, in the case in which the mixture is not fluid. Specific examples of the procedure for shaping the mixture include powder pressing, in which powder obtained by drying and pulverizing the mixture obtained after the mixing step is compressed in a die.

In the case in which the mixture obtained after the mixing step has a large content of the solvent, a drying step for volatilizing the solvent may be provided before or after the molding step.

### (Sintering Step)

In the sintering step, the metal powder in the molded body is sintered, while the air holes are formed through the thermal decomposition of the resin, by heating the molded body obtained after the molding step. It is to be noted that, it is preferred that the temperature is raised gradually at a constant rate to a sintering temperature, such that the iron negative electrode 1 to be obtained is not completely oxidized (such that the iron negative electrode 1 has a non-oxidized portion), in light of improvement of the discharge capacity.

The heating temperature may be, for example, higher than or equal to 900 °C, and more preferably higher than or equal to 1,000 °C and less than or equal to 1,300 °C. The heating time period may be, for example, greater than or equal to 15 min and less than or equal to 1 hour.

By carrying out the sintering step in an inert gas atmosphere, carbon in the resin is enabled to be carbonized and to remain as carbon on the surface of the three-dimensionally formed structure. As the inert gas, for example, nitrogen gas may be used.

### Other Embodiments

The above-described embodiment does not limit the construction of the present invention. Therefore, constitutive elements of each part of the above-described embodiment may be omitted, replaced, or added based on the descriptions of the present specification and the common technical knowledge, and such omission, replacement, and addition should be construed as falling within the scope of the present invention.

The iron-air secondary battery of the present invention is not limited to the one having the three-layered structure of: the iron negative electrode; the electrolyte; and the air electrode, and may also have, for example, a five-layered structure in which an electrolyte layer is formed on both sides of the iron negative electrode, and the air electrode is provided on an outer side of each electrolyte layer. The iron-air secondary battery may also include a plurality of iron negative electrodes. In addition, the iron negative electrode, the electrolyte, and the air electrode may be each formed in a tubular shape or a spiral shape. In other words, shapes of the iron negative electrode, the electrolyte, and the air electrode are not particularly limited.

### EXAMPLES

Hereinafter, the present invention will be described in detail by way of Examples; however, the Examples are not construed as limiting the present invention.

### < Example 1 >

First, negative electrodes for an iron-air secondary battery having different porosities were produced, and then a relationship between the porosity and the discharge performance was investigated by the three-electrode method.

### (Negative Electrode for Iron-Air Secondary Battery)

As to the material for the negative electrode for an iron-air secondary battery, water atomized iron powder "ATOMEL 250M" available from Kobe Steel, Ltd. having a mean particle diameter of 70 µm was used as the metal powder, and polyvinyl alcohol was used as the resin to be mixed with the metal powder.

Specifically, first, 8g of polyvinyl alcohol was mixed with 6 g of water, and the mixed solution thus obtained was heated to 80 °C to dissolve polyvinyl alcohol. The aqueous polyvinyl alcohol solution thus prepared was mixed with 80 g of the metal powder.

Subsequently, a disk-shaped cavity of 2 cm in diameter and 0.5 cm in height was filled with the mixture thus obtained, to form a disk-shaped molded body.

The molded body was dried and then sintered by heating at 1,120 °C for 20 min in a nitrogen gas atmosphere. The sintered body thus obtained was cut into a columnar shape of 5 mm × 5 mm × 15 mm by wire electric discharge machining, and used as an iron negative electrode of Example 1. Carbon was attached to the surface of a three-dimensionally formed structure of the metal powder included in the iron negative electrode obtained by the aforementioned method.

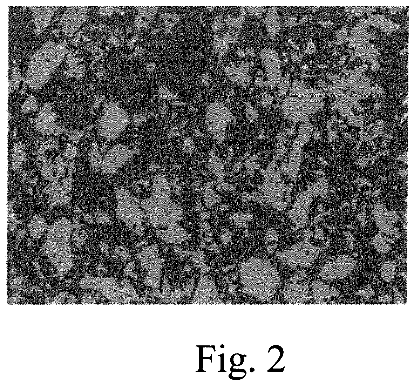

A micrograph of the surface of the negative electrode for an iron-air secondary battery of Example 1 is shown in Fig. 2. In the micrograph, highlights correspond to the iron particles, while shadows correspond to voids. It is to be noted that the porosity of the negative electrode for an iron-air secondary battery was about 50%.

### < Comparative Example >

For comparison purposes, Comparative Example of the iron negative electrode was obtained by sintering the metal powder without mixing the resin therewith, and cutting the sintered body thus obtained into a columnar shape of 5 mm × 5 mm × 15 mm by wire electric discharge machining. The porosity of Comparative Example of the iron negative electrode was about 18%. Therefore, air holes in Comparative Example do not sufficiently communicate with each other, and considered not to be continuous air holes.

Subsequently, the electrodes were evaluated. Charge/discharge characteristics of batteries were evaluated by the three-electrode method, for comparison of characteristics of the iron negative electrodes only. Specifically, a Hg/HgO (1 M-NaOH) electrode was used as a reference electrode, while a Pt electrode was used as a counter electrode. A 8M-KOH aqueous solution was used as the electrolyte. A region of 5 mm from the tip of the iron negative electrode was immersed in the electrolyte. Evaluations were carried out with a charging current of 5 mA and a discharging current of 5 mA. Charging time period was 48 hrs for both of the electrodes.

### (Charge/Discharge Characteristics)

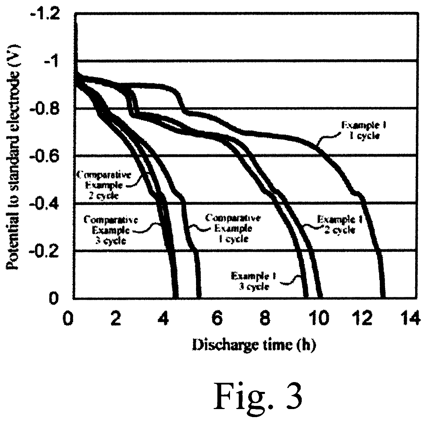

Changes in voltage during discharge, at 5 mA, of the iron negative electrodes of Example 1 and Comparative Example having been charged at 5 mA for 48 hrs are shown in Fig. 3. It is to be noted that Fig. 3 shows the results of three cycles.

As shown in Fig. 3, charge/discharge was observed in both of the iron electrodes, and therefore it was proven that these iron electrodes were each able to function in a secondary battery. The iron negative electrode of Example 1 having the porosity of 50% continued to discharge for about 13 hrs as initial discharge (first discharge cycle), and continued to discharge for over 10 hrs even after stabilization (second discharge cycle or later), while the iron electrode of Comparative Example having the porosity of 18% continued to discharge for merely about 4 hrs. In addition, substantial flat portions corresponding to oxidization reactions were observed as the discharge characteristics of the iron negative electrode of Example 1, while only slight flat portions were observed as the discharge characteristics of the iron negative electrode of Comparative Example. Furthermore, the discharge density per weight of iron of the iron negative electrode of Example 1 was as high as 100 mAh/g or greater, while the discharge density per weight of iron of the iron negative electrode of Comparative Example was merely about 25 mAh/g. It was confirmed that the present invention produces the effect of improving the energy density.

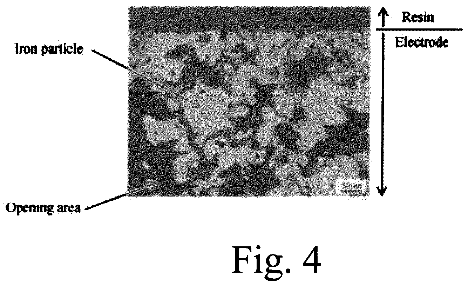

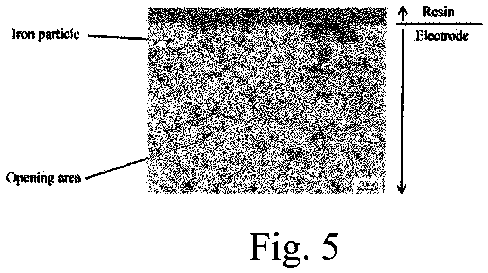

After completion of discharge, a cross section of each of the iron negative electrodes of Example 1 and Comparative Example was observed. Specifically, each electrode was cut and embedded in a resin, and the resin was polished to expose a cross section of the electrode, which was then observed. Micrographs of the cross sections are shown in Figs. 4 and 5. In the iron negative electrode of Example 1 (Fig. 4) having the porosity of 50%, a large number of opening areas (shadows) were observed around the iron negative electrode shown as highlights, and formation of iron oxide on the surface thereof was confirmed. In other words, it was proven that in the iron negative electrode of Example 1, even an inner part thereof contributed to charge/discharge. On the other hand, in the iron negative electrode of Comparative Example (Fig. 5) having the porosity of 18%, opening areas (shadows) were discrete, and, unlike the iron negative electrode of Example 1 having the porosity of 50%, a charge/discharge reaction in the inner part was not be confirmed. From these results, it was proven that in the iron negative electrode of Example 1 having the porosity of 50%, the opening areas were connected to the outside and consequently even the inner part thereof contributed to charge/discharge.

### < Example 2 >

Next, in order to increase the contact area between the three-dimensionally formed structure of the iron negative electrode and the electrolyte, a negative electrode was produced by compounding the iron particles by electrostatic adsorption.

A specific procedure for producing the negative electrode was as follows: sponge iron (mean particle diameter: about 5 µm) as sub-particles was processed with: polydiallyldimethylammonium chloride (PDDA); polystyrene sodium sulfonate (PSS); and PDDA in this order by an electrostatic adsorption compounding process, and then imparting a positive charge. Meanwhile, iron particles (mean particle diameter: about 45 µm) as base particles were processed with: PSS; PDDA; and PSS in this order, and then imparting a negative charge. Then, the sponge iron and the iron particles were mixed to prepare iron composite particles. The iron composite particles thus prepared were molded and sintered by the slip casting process to produce a porous body. In the production of the porous body, an iron oxide porous body was produced by sintering through temperature rising from room temperature to 800 °C and then heating at 800 °C for 1 hour, and an iron porous body was produced by sintering through heating at 800 °C for 20 min without the temperature rising, as negative electrode materials. For both of the negative electrode materials, the density estimated from a total volume thereof was about 2.5 to 3 g/cm³, which is about 30% to 38% of the density of iron and corresponds to the porosity of 62 to 70%.

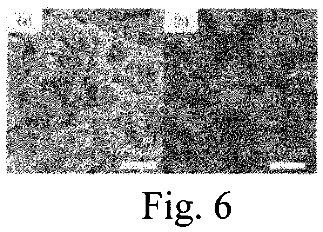

A structure of each of the porous negative electrode materials produced above was observed with a scanning electron microscope (SEM). Fig. 6 shows results of observation with the SEM of the surface (a) and the inner part (b) of the iron porous body. From these results, it was confirmed that the iron porous body produced above included the sub-particle between the base particles, to consequently have a structure in which gaps each having the size of the sub-particle were provided. In the iron porous body, the surface was sintered while the inner part was not sintered. XRD measurement results showed that the iron oxide porous body exhibited only peaks of iron oxide and was entirely oxidized, while the iron porous body exhibited peaks of iron and iron oxide.

In addition, the porous negative electrode materials produced above were evaluated for redox behavior, by cyclic voltammetry in aqueous potassium hydroxide solution. A test for the evaluation was carried out by using the iron oxide porous body and the iron porous body produced above as working electrodes, a Hg/HgO (1M-NaOH) electrode as a reference electrode, and a Pt electrode as a counter electrode, at a charging rate being 10 mA, and discharging rates of the iron oxide porous body and the iron porous body being 0.2 mA and 5 mA, respectively.

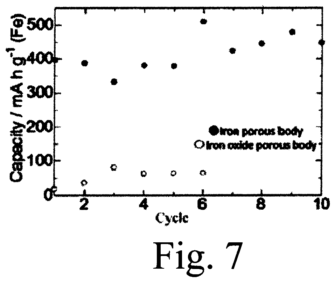

The cycle characteristics revealed in the aforementioned test are shown in Fig. 7. The iron oxide porous body exhibited a discharge capacity of 20 to 100 mAh/g on a Fe weight basis. On the other hand, the iron porous body exhibited a discharge capacity of 300 to 500 mAh/g which was greater than that of the iron oxide porous body, and no cycle deterioration was observed. From these results, it was proven that the iron porous body may be used as a useful negative electrode material for an air battery. As the reason for achieving such an effect, it is inferred that iron remained in the inner part of the iron porous body, resulting in formation of a large number of electron conductive paths and in turn an improvement in discharge capacity.

### < Example 3 >

Next, by using the iron negative electrode of Example 1, a negative electrode for an iron-air secondary battery of Example 3 was produced according to the aforementioned embodiment, and a prototype iron-air secondary battery including the negative electrode was produced. Performance of the prototype iron-air secondary battery was tested.

### (Air Electrode)

As an air electrode, commercially available carbon paper carrying a platinum catalyst ("EC-10-05-7" available from Toray Industries, Inc.) was used.

As an electrolyte, an aqueous potassium hydroxide solution of 8M was used. In addition, potassium sulfide (K₂S) of 0.05M was added to the electrolyte in a part of the test.

### (Charge/Discharge Characteristics)

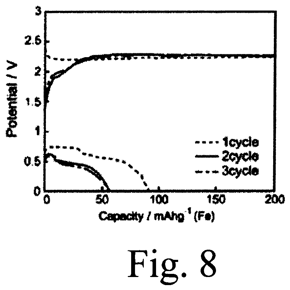

Changes in voltage during discharge, at 5 mA, of the prototype iron-air secondary battery of the aforementioned configuration having been charged at 5 mA for 48 hrs (charge capacity: 517 mAh/g) are shown in Fig. 8. As shown in Fig. 8, upon discharge, two substantial flat portions corresponding to oxidization of iron were observed. An initial discharge capacity was 91 mAh/g (Fe), a discharge capacity in the second cycle was 55 mAh/g (Fe), and a discharge capacity in the third cycle was 54 mAh/g (Fe). Charge/discharge, i.e., function of the secondary battery, was thus confirmed. In the case in which K₂S was added to the electrolyte, charge/discharge was similarly confirmed, in which an initial discharge capacity was 115 mAh/g (Fe).

### < Example 4 >

Next, a negative electrode for an iron-air secondary battery of Example 4 was produced according to the aforementioned embodiment, and a prototype iron-air secondary battery including the negative electrode was produced. Performance of the prototype iron-air secondary battery was tested.

### (Negative Electrode for Iron-Air Secondary Battery)

As to the material for the negative electrode for an iron-air secondary battery, water atomized iron powder "ATOMEL 300M" available from Kobe Steel, Ltd. having a mean particle diameter of 70 µm was used as the metal powder. The production method was similar to that of Example 1.

Specifically, first, 8g of polyvinyl alcohol was mixed with 6 g of water, and the mixed solution thus obtained was heated to 80 °C to dissolve polyvinyl alcohol. The aqueous polyvinyl alcohol solution thus prepared was mixed with 80 g of the metal powder.

Subsequently, a circular cylindrical cavity of 1 cm in diameter and 1 cm in height was filled with the mixture thus obtained, to form a circular cylindrical molded body.

The molded body was dried and then sintered by heating at 1,120 °C for 20 min in a nitrogen gas atmosphere. The sintered body thus obtained was washed with hydrochloric acid, and then used as a negative electrode for an iron-air secondary battery of Example 4. No carbon was attached to the surface of a three-dimensionally formed structure of the metal powder included in the iron negative electrode of Example 4 obtained above.

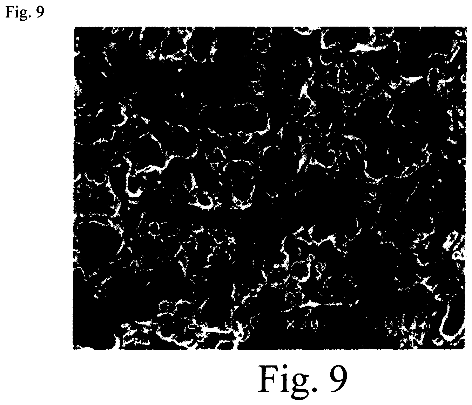

A scanning electron microscope (SEM) micrograph of the surface of the negative electrode for an iron-air secondary battery of Example 4 is shown in Fig. 9. The porosity of the negative electrode for an iron-air secondary battery was about 50%.

### (Air Electrode)

As an air electrode, water repellent carbon paper with electrolytic manganese dioxide as an oxygen reduction catalyst being applied thereto was used.

As an electrolyte, an aqueous potassium hydroxide solution of 8M was used.

### (Charge/Discharge Characteristics)

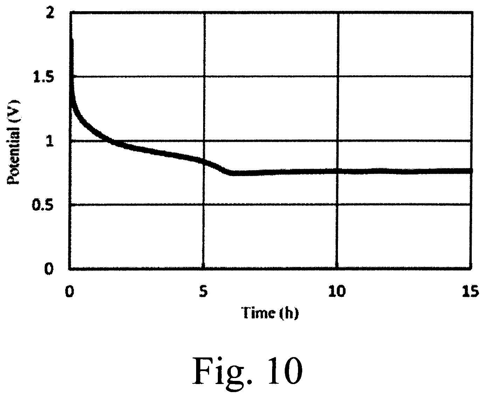

Changes in voltage during discharge, at 0.2 mA, of the prototype iron-air secondary battery of the aforementioned configuration having been charged at 5 mA for 30 hrs are shown in Fig. 10.

As shown in Fig. 10, the prototype iron-air secondary battery continued to discharge over 500 hrs, although a slight reduction in voltage was observed after a lapse of 200 hrs. Ultimately, discharge for 900 hrs was confirmed. From these results, it was confirmed that the prototype battery had practically sufficient discharge characteristics.

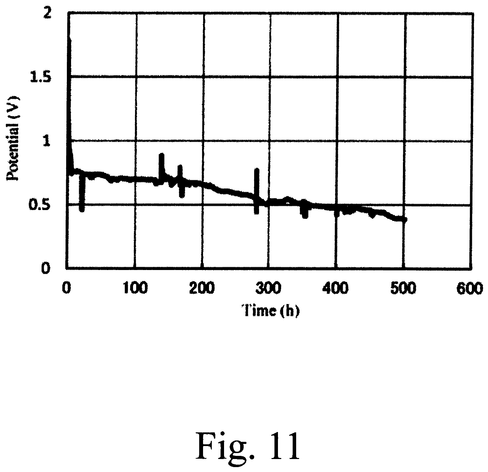

The changes in voltage immediately after the start of the discharge were, more specifically: an exponential and rapid decrease in voltage during 6 hrs after the start of the discharge; and then a substantially linear and slow decrease in voltage after a lapse of 6 hrs from the start of the discharge, as shown in Fig. 11. As the reason for such changes, it is inferred that, in an initial phase of the discharge, generation of iron hydroxide (Fe(OH)₂) through a reaction of iron (Fe) with a hydroxide ion (OH⁻) was predominant, and then generation of iron tetraoxide (Fe₃O₄) and water (H₂O) through a further reaction of iron hydroxide thus generated with a hydroxide ion (OH⁻) was predominant.

### < Example 5 >

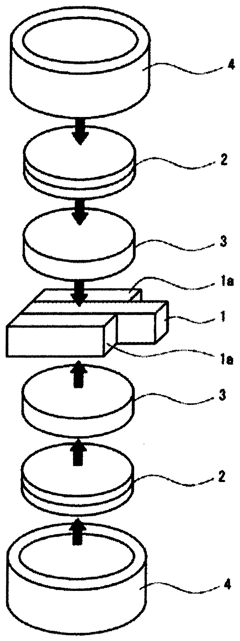

Next, by using the iron negative electrode of Example 1, a negative electrode for an iron-air secondary battery of Example 5 was produced according to the aforementioned embodiment. A configuration of the iron-air secondary battery is shown in Fig. 12 as a schematic view. A prototype all-solid-state iron-air secondary battery of such a configuration was produced, and performance of the prototype all-solid-state iron-air secondary battery was tested.

### (Air Electrode)

As an air electrode 2, commercially available carbon paper carrying 0.5 mg of a platinum catalyst ("EC-10-05-7" available from Toray Industries, Inc.) was used.

As an electrolyte 3, KOH-ZrO₂ solid electrolyte formed into powder pellets was used. On both sides of the iron negative electrode 1, a pair of electrolytes 3 each weighing 0.3 g was disposed so as to sandwich the iron negative electrode 1. A pair of air electrodes 2 was provided on outer sides of the pair of electrolytes 3. It is to be noted that the iron negative electrode 1 was sandwiched between a pair of glass slides 1a from a direction perpendicular to a lamination direction of the electrodes. In addition, a pair of ring-shaped guides 4 made of Teflon (registered trademark) was used to fix the circumference of the air electrode 2, such that an airflow path was secured and members were closely attached to each other. It is to be noted that a weight of the iron negative electrode 1 (three-dimensionally formed structure of the metal powder) was 4.4256 g.

### (Charge/Discharge Characteristics)

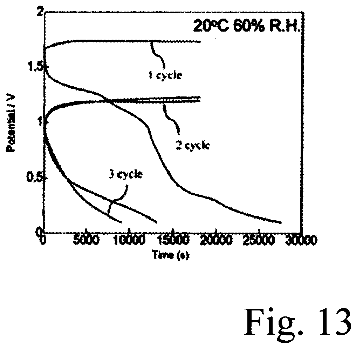

Changes in voltage during discharge, at 0.2 mA, of the prototype iron-air secondary battery of the aforementioned configuration having been charged at 5 mA for 5 hrs are shown in Fig. 13. As shown in Fig. 12, in the all-solid-state iron-air secondary battery including the negative electrode of Example 5, charge/discharge, i.e., function of the secondary battery, was thus confirmed.

From the above results, it was proven that the iron-air secondary battery including the negative electrode for an iron-air secondary battery of the present invention had a high energy density.

Disclosures of the present specification include the following aspects.

### Aspect 1:

A negative electrode for use in an iron-air secondary battery, the negative electrode comprising a three-dimensionally formed structure in which particles of metal powder comprising iron or an iron alloy as a principal component are coupled to each other through metallic bonding, wherein the negative electrode has a porosity of greater than or equal to 30% and less than or equal to 70%.

### Aspect 2:

The negative electrode according to Aspect 1, wherein the three-dimensionally formed structure is a sintered body of the metal powder.

### Aspect 3:

The negative electrode according to Aspect 1 or 2, wherein the three-dimensionally formed structure has continuous air holes.

### Aspect 4:

The negative electrode according to any one of Aspects 1 to 3, wherein carbon or sulfur is attached to a surface of the three-dimensionally formed structure.

### Aspect 5:

The negative electrode according to any one of Aspects 1 to 4, wherein a mean particle diameter of the metal powder is greater than or equal to 10 µm and less than or equal to 100 µm.

### Aspect 6:

The negative electrode according to any one of Aspects 1 to 5, wherein the metal powder is water-atomized powder.

### Aspect 7:

The negative electrode according to any one of Aspects 1 to 6, wherein the iron-air secondary battery comprises a solid electrolyte.

### Aspect 8:

An iron-air secondary battery comprising the negative electrode according to any one of Aspects 1 to 7.

### Aspect 9:

A production method of a negative electrode for an iron-air secondary battery, comprising: mixing with a resin, metal powder comprising iron or an iron alloy as a principle component; molding a mixture obtained after the mixing; and sintering a molded body obtained after the molding.

The present application claims priority to Japanese Patent Application No. 2015-135656, filed on July 6, 2015, Japanese Patent Application No. 2015-218506, filed on November 6, 2015, and Japanese Patent Application No. 2016-053895, filed on March 17, 2016. The contents of Japanese Patent Application Nos. 2015-135656, 2015-218506, and 2016-053895 are incorporated herein by reference in their entirety.

### [INDUSTRIAL APPLICABILITY]

The iron-air secondary battery including the negative electrode for an iron-air secondary battery of the present invention can be widely used as a rechargeable battery.

### [Explanation of the Reference Symbols]

- 1: Iron negative electrode (Negative electrode for iron-air secondary battery)
- 1a: Glass slide
- 2: Air electrode (Positive electrode for iron-air secondary battery)
- 3: Electrolyte
- 4: Guide
- X: Load

## Claims

1. A negative electrode for use in an iron-air secondary battery, the negative electrode comprising a three-dimensionally formed structure in which particles of metal powder comprising iron or an iron alloy as a principal component are coupled to each other through metallic bonding, wherein
the negative electrode has a porosity of greater than or equal to 30% and less than or equal to 70%.

2. The negative electrode according to claim 1, wherein the three-dimensionally formed structure is a sintered body of the metal powder.

3. The negative electrode according to claim 1, wherein the three-dimensionally formed structure has continuous air holes.

4. The negative electrode according to claim 1, wherein carbon or sulfur is attached to a surface of the three-dimensionally formed structure.

5. The negative electrode according to claim 1, wherein a mean particle diameter of the metal powder is greater than or equal to 10 µm and less than or equal to 100 µm.

6. The negative electrode according to claim 1, wherein the metal powder is water-atomized powder.

7. The negative electrode according to claim 1, wherein the iron-air secondary battery comprises a solid electrolyte.

8. An iron-air secondary battery comprising the negative electrode according to claim 1.

9. A production method of a negative electrode for an iron-air secondary battery, comprising:
mixing with a resin, metal powder comprising iron or an iron alloy as a principle component;
molding a mixture obtained after the mixing; and
sintering a molded body obtained after the molding.
